# EUROPEAN PATENT APPLICATION

(11) **EP 2 728 594 A1**
(43) Date of publication of application: **07.05.2014**
(21) Application number: 11868452.1
(22) Date of filing: 30.06.2011
(51) Int. Cl.: H01F 38/14, B60L 5/00, B60L 11/18, B60M 7/00, H02J 17/00

(54) **POWER TRANSMITTING DEVICE, POWER RECEIVING DEVICE, AND POWER TRANSMISSION SYSTEM**

(71) Applicant: TOYOTA JIDOSHA KABUSHIKI KAISHA, Toyota-shi, Aichi-ken, 471-8571 (JP)
(72) Inventor: NAKAMURA, Koji, Toyota-shi, Aichi 471-8571 (JP)
(74) Representative: Winter, Brandl, Fürniss, Hübner, Röss, Kaiser, Polte - Partnerschaft
(86) International application number: PCT/JP2011/065013
(87) International publication number: WO 2013/001636

(57) **Abstract**

A power transmission device (41) for use in a power transfer system in which resonance through an electromagnetic field is used includes a power-transmission-side electromagnetic induction coil (23), a power-transmission-side resonance unit (28), and a power-transmission-side shield unit (51) surrounding the power-transmission-side electromagnetic induction coil (23) and the power-transmission-side resonance unit (28). The power-transmission-side electromagnetic induction coil (23) and the power-transmission-side resonance unit (28) are disposed in an identical plane.

## Description

### TECHNICAL FIELD

The present invention relates to a power transmission device, a power reception device and a power transfer system.

### BACKGROUND ART

In recent years, hybrid vehicles, electric vehicles and the like driving driven wheels by means of electric power of a battery or the like in environmental consideration are attracting attention.

Particularly in recent years, wireless charging for an electric powered vehicle equipped with a battery as described above that can be charged in a contactless manner without using any plug or the like is attracting attention. These days, the spotlight is focused on various types of charging systems are also proposed as such a contactless charging system, and particularly, a technique of transmitting electric power in a contactless manner through use of a resonance phenomenon.

Such a contactless power transfer system through use of electromagnetic resonance includes systems disclosed in Japanese Patent Laying-Open Nos. 2010-070048, 2010-073976 and 2010-226946, for example. These power transfer systems each include a power transmission device provided on a vehicle placement surface (motor pool) on the power transmission side and a power reception device provided on the power receiving side, for example. Electric power is transmitted between the power transmission device and the power reception device by electromagnetic resonance.

### CITATION LIST

### PATENT DOCUMENT

PTD 1: Japanese Patent Laying-Open No. 2010-070048
PTD 2: Japanese Patent Laying-Open No. 2010-073976
PTD 3: Japanese Patent Laying-Open No. 2010-226946

### SUMMARY OF INVENTION

### TECHNICAL PROBLEM

Here, coils included in the power transmission device and the power reception device and the like are stacked in a direction that the power transmission device and the power reception device are opposed to each other. Therefore, the power transmission device and the power reception device have a predetermined thickness in the direction that the coils are stacked.

For example, when the power transmission device is placed on the vehicle placement surface on which vehicles pass, the power transmission device is likely to be run over because it has a predetermined thickness. Therefore, the power transmission device needs to be designed in consideration of its withstand load.

In addition, when the power transmission device is placed on the vehicle placement surface, the power transmission device protrudes from the vehicle placement surface. Therefore, the power transmission device also needs to be designed to have a structure not interfering with walking of pedestrians and the like.

In this manner, when providing the power transmission device on the vehicle placement surface, an advanced design technique is required for the power transmission device, and cost increase on the power transmission side is of concern. The same also applies to the case of providing the power reception device on the vehicle placement surface.

Moreover, when the power reception device is mounted on the vehicle side, an advanced design technique is also required for mounting the power reception device having a predetermined thickness in the direction that coils are stacked in a limited vehicle space, and cost increase on the power receiving side is of concern.

The present invention was made in view of the above problems, and has an object to provide a power transmission device, a power reception device and a power transfer system having a structure that, when designing the power transmission device and the power reception device used for the power transfer system, can facilitate designing and constructing the power transmission device and the power reception device in the thickness direction in the case of placing the power transmission device and the power reception device on a vehicle placement surface or in the case of placing them on a vehicle.

### SOLUTION TO PROBLEM

A power transmission device based on the present invention is a power transmission device for use in a power transfer system in which resonance through an electromagnetic field is used, including a power-transmission-side electromagnetic induction coil, a power-transmission-side resonance unit, and a power-transmission-side shield unit surrounding the power-transmission-side electromagnetic induction coil and the power-transmission-side resonance unit. The power-transmission-side electromagnetic induction coil and the power-transmission-side resonance unit are disposed in an identical plane.

In another embodiment, the power-transmission-side resonance unit has a power-transmission-side resonance coil, and the power-transmission-side electromagnetic induction coil and the power-transmission-side resonance coil are disposed in an identical plane.

In another embodiment, the power-transmission-side resonance coil is disposed on the inner side of the power-transmission-side electromagnetic induction coil.

In another embodiment, the power transmission device is provided at a vehicle placement surface, and the power-transmission-side electromagnetic induction coil, the power-transmission-side resonance coil and the power-transmission-side shield unit are embedded under the vehicle placement surface.

In another embodiment, the power transmission device includes a plurality of slots recessed from the vehicle placement surface. The power-transmission-side electromagnetic induction coil, the power-transmission-side resonance coil and the power-transmission-side shield unit are disposed in the slots, respectively.

In another embodiment, the vehicle placement surface is a surface of a motor pool having a reinforcing member embedded in the ground, and the power-transmission-side shield unit is connected to the reinforcing member.

A power reception device based on the present invention is a power reception device for use in a power transfer system in which resonance through an electromagnetic field is used, including a power-receiving-side electromagnetic induction coil, a power-receiving-side resonance unit, and a power-receiving-side shield unit surrounding the power-receiving-side electromagnetic induction coil and the power-receiving-side resonance unit. The power-receiving-side electromagnetic induction coil and the power-receiving-side resonance unit are disposed in an identical plane.

In another embodiment, the power-receiving-side resonance unit has a power-receiving-side resonance coil, and the power-receiving-side electromagnetic induction coil and the power-receiving-side resonance coil are disposed in an identical plane.

In another embodiment, the power-receiving-side resonance coil is disposed on the inner side of the power-receiving-side electromagnetic induction coil.

A power transfer system based on the present invention is a power transfer system including a power transmission device and a power reception device. The power transmission device includes a power-transmission-side electromagnetic induction coil, a power-transmission-side resonance unit, and a power-transmission-side shield unit surrounding the power-transmission-side electromagnetic induction coil and the power-transmission-side resonance unit. The power reception device includes a power-receiving-side electromagnetic induction coil, a power-receiving-side resonance unit configured to resonate with the power-transmission-side resonance unit through an electromagnetic field, and a power-receiving-side shield unit surrounding the power-receiving-side electromagnetic induction coil and the power-receiving-side resonance unit.

The power-transmission-side electromagnetic induction coil and the power-transmission-side resonance unit are disposed in an identical plane.

In another embodiment, the power-transmission-side resonance unit has a power-transmission-side resonance coil, and the power-transmission-side electromagnetic induction coil and the power-transmission-side resonance coil are disposed in an identical plane.

In another embodiment, the power-transmission-side resonance coil is disposed on the inner side of the power-transmission-side electromagnetic induction coil.

In another embodiment, the power transmission device is provided at a vehicle placement surface, and the power-transmission-side electromagnetic induction coil, the power-transmission-side resonance coil and the power-transmission-side shield unit are embedded under the vehicle placement surface.

In another embodiment, the power transfer system includes a plurality of slots recessed from the vehicle placement surface. The power-transmission-side electromagnetic induction coil, the power-transmission-side resonance coil and the power-transmission-side shield unit are disposed in the slots, respectively.

In another embodiment, the vehicle placement surface is a surface of a motor pool having a reinforcing member embedded in the ground, and the power-transmission-side shield unit is a connected to the reinforcing member.

Another aspect of the power transfer system based on the present invention is a power transfer system including a power transmission device and a power reception device. The power transmission device includes a power-transmission-side electromagnetic induction coil, a power-transmission-side resonance unit and a power-transmission-side shield unit surrounding the power-transmission-side electromagnetic induction coil and the power-transmission-side resonance unit. The power reception device includes a power-receiving-side electromagnetic induction coil, a power-receiving-side resonance unit configured to resonate with the power-transmission-side resonance unit through an electromagnetic field, and a power-receiving-side shield unit surrounding the power-receiving-side electromagnetic induction coil and the power-receiving-side resonance unit. The power-receiving-side electromagnetic induction coil and the power-receiving-side resonance unit are disposed in an identical plane.

In another embodiment, the power-receiving-side resonance unit has a power-receiving-side resonance coil, and the power-receiving-side electromagnetic induction coil and the power-receiving-side resonance coil are disposed in an identical plane.

In another embodiment, the power-receiving-side resonance coil is disposed on the inner side of the power-receiving-side electromagnetic induction coil.

Still another aspect of the power transfer system based on the present invention is a power transfer system including a power transmission device and a power reception device. The power transmission device includes a power-transmission-side electromagnetic induction coil, a power-transmission-side resonance unit, and a power-transmission-side shield unit surrounding the power-transmission-side electromagnetic induction coil and the power-transmission-side resonance unit. The power reception device includes a power-receiving-side electromagnetic induction coil, a power-receiving-side resonance unit configured to resonate with the power-transmission-side resonance unit through an electromagnetic field, and a power-receiving-side shield unit surrounding the power-receiving-side electromagnetic induction coil and the power-receiving-side resonance unit. The power-transmission-side electromagnetic induction coil and the power-transmission-side resonance unit are disposed in an identical plane. The power-receiving-side electromagnetic induction coil and the power-receiving-side resonance unit are disposed in an identical plane.

In another embodiment, the power-transmission-side resonance unit has a power-transmission-side resonance coil. The power-transmission-side electromagnetic induction coil and the power-transmission-side resonance coil are disposed in an identical plane. The power-receiving-side resonance unit has a power-receiving-side resonance coil. The power-receiving-side electromagnetic induction coil and the power-receiving-side resonance coil are disposed in an identical plane.

In another embodiment, the power-transmission-side resonance coil is disposed on the inner side of the power-transmission-side electromagnetic induction coil, and the power-receiving-side resonance coil is disposed on the inner side of the power-receiving-side electromagnetic induction coil.

### ADVANTAGEOUS EFFECTS OF INVENTION

When designing a power transmission device and a power reception device used for a power transfer system, the present invention can facilitate designing and constructing the power transmission device and the power reception device in the thickness direction in the case of placing the power transmission device and the power reception device on a vehicle placement surface or in the case of placing them on a vehicle.

### BRIEF DESCRIPTION OF DRAWINGS

Fig. 1 is a schematic diagram showing a power transmission device, a power reception device and a power transfer system according to an embodiment.
Fig. 2 is a schematic diagram for illustrating the principle of power transmission and power reception by a resonance scheme.
Fig. 3 is a diagram showing the relationship between the distance from an electric current source (magnetic current source) and the intensity of an electromagnetic field.
Fig. 4 is a schematic side view of a vehicle placed on a vehicle placement surface and a power transmission device (power reception device) embedded in the vehicle placement surface.
Fig. 5 is a plan view showing a schematic structure of the power transmission device (power reception device) according to an embodiment.
Fig. 6 is an arrow sectional view taken along the line VI-VI in Fig. 5.
Fig. 7 is a cross sectional view showing a cooling structure of a power transmission device (power reception device) according to an embodiment.
Fig. 8 is a plan view showing a schematic structure of a power transmission device (power reception device) having another form according to an embodiment.
Fig. 9 is a plan view showing a schematic structure of a power transmission device (power reception device) having still another form according to an embodiment.
Fig. 10 is a plan view showing a schematic structure of a power transmission device (power reception device) having still another form according to an embodiment.
Fig. 11 is a schematic side view of a vehicle placed on a vehicle placement surface and a power transmission device (power reception device) placed on the vehicle placement surface.
Fig. 12 is a schematic diagram showing a state according to an embodiment where a power transmission device is placed on a vehicle and a power reception device is placed on a vehicle placement surface.

### DESCRIPTION OF EMBODIMENTS

Hereinafter, a power transmission device, a power reception device and a power transfer system according to an embodiment based on the present invention will be described with reference to the drawings. It is noted that when the number, an amount or the like is mentioned in each embodiment described below, the scope of the present invention is not necessarily limited to that number, that amount or the like, unless otherwise specified. The same portions or corresponding portions have the same reference characters allotted, and detailed description thereof may not be repeated. Moreover, combination as appropriate of features in embodiments is originally encompassed.

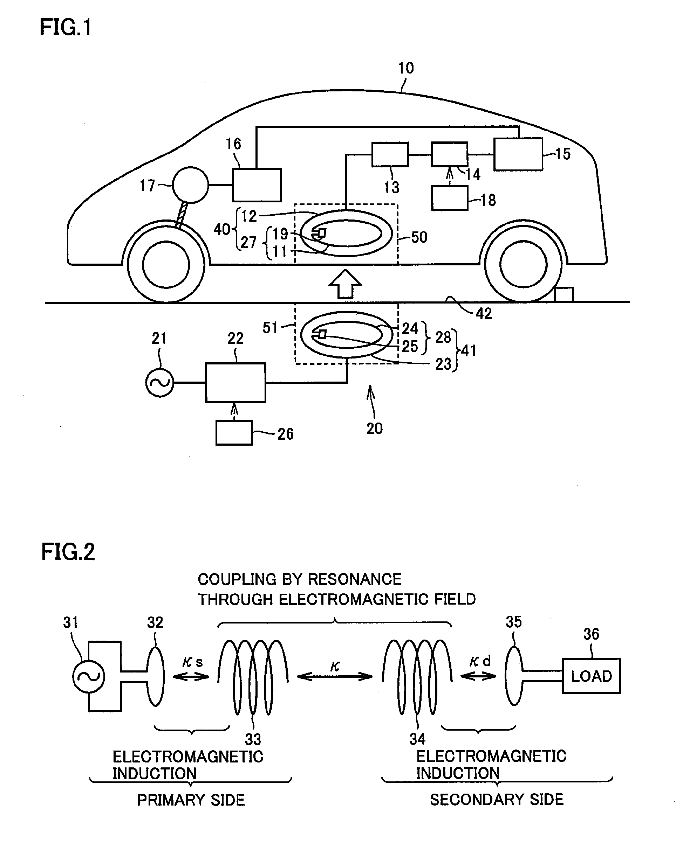

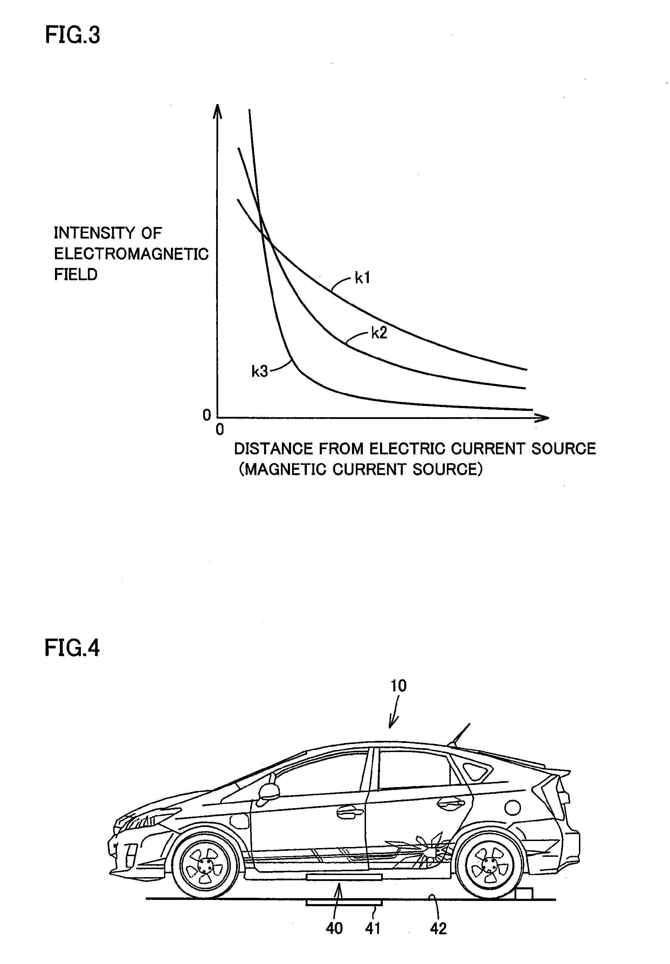

First, referring to Figs. 1 to 3, a power transmission device, a power reception device and a power transfer system according to an embodiment based on the present invention will be described. It is noted that Fig. 1 is a schematic diagram showing the power transmission device, the power reception device and the power transfer system, Fig. 2 is a schematic diagram for illustrating the principle of power transmission and power reception by a resonance scheme, and Fig. 3 is a diagram showing the relationship between the distance from an electric current source (magnetic current source) and the intensity of an electromagnetic field.

As shown in Fig. 1, the power transfer system according to the embodiment has an electric powered vehicle 10 including a power reception device 40 and an external power feeding device 20 including a power transmission device 41. Electric powered vehicle 10 stops such that power reception device 40 is located at a specified position of a parking space having a vehicle placement surface 42 in which power transmission device 41 is provided, and mainly receives electric power from power transmission device 41. External power feeding device 20 is embedded in the parking space having vehicle placement surface 42.

Vehicle placement surface 42 is provided with a chock and a line such that electric powered vehicle 10 stops at a predetermined position.

External power feeding device 20 includes a high frequency power driver 22 connected to an AC power source 21, a control unit 26 controlling driving of high frequency power driver 22 and the like, and power transmission device 41 connected to this high frequency power driver 22.

Power transmission device 41 includes a power-transmission-side resonance unit 28 and a power-transmission-side electromagnetic induction coil 23. Power-transmission-side resonance unit 28 includes a power-transmission-side resonance coil 24 and a power-transmission-side capacitor 25 connected to power-transmission-side resonance coil 24. Power-transmission-side electromagnetic induction coil 23 is electrically connected to high frequency power driver 22.

Power transmission device 41 is surrounded by a power-transmission-side shield unit 51 shielding an electromagnetic field generated from power-transmission-side electromagnetic induction coil 23 and power-transmission-side resonance coil 24. It is noted that, although power-transmission-side capacitor 25 is provided in the example shown in Fig. 1, power-transmission-side capacitor 25 is not an essential structure.

AC power source 21 is a power supply outside the vehicle, and is a system power supply, for example. High frequency power driver 22 converts electric power received from AC power source 21 into electric power of high frequency, and supplies the converted high frequency power to power-transmission-side electromagnetic induction coil 23. It is noted that the frequency of the high frequency power generated by high frequency power driver 22 ranges from 1 MHz to several tens of megahertz, for example.

With the above-mentioned high frequency power supplied to power-transmission-side electromagnetic induction coil 23, the magnetic flux amount produced from power-transmission-side electromagnetic induction coil 23 changes with time.

Power-transmission-side resonance coil 24 is coupled to transmission side electromagnetic induction coil 23 so as to achieve electromagnetic induction. With the change in magnetic flux amount from power-transmission-side resonance coil 24, an electric current of high frequency also flows through power-transmission-side resonance coil 24 by electromagnetic induction.

On this occasion, electric current is supplied to power-transmission-side electromagnetic induction coil 23 such that the frequency of the high frequency current flowing through power-transmission-side resonance coil 24, the reactance of power-transmission-side electromagnetic induction coil 23, and the resonance frequency determined by the capacitance of power-transmission-side capacitor 25 and the self-capacitance of power-transmission-side resonance coil 24 are substantially in agreement with one another. Power-transmission-side resonance coil 24 and power-transmission-side capacitor 25 function as a series LC resonator (a resonance unit).

An electric field and a magnetic field of substantially the same frequency as the resonance frequency are produced around power-transmission-side resonance coil 24. In this manner, an electromagnetic field of a predetermined frequency is produced around power-transmission-side resonance coil 24.

Electric powered vehicle 10 includes power reception device 40, a rectifier 13 connected to power reception device 40, a DC-DC converter 14 connected to rectifier 13, a battery 15 connected to this DC-DC converter 14, a power control unit (PCU (Power Control Unit)) 16, a motor unit 17 connected to this power control unit 16, and a vehicle ECU (Electronic Control Unit) 18 controlling driving of DC-DC converter 14, power control unit 16 and the like.

It is noted that electric powered vehicle 10 according to the present embodiment is a hybrid vehicle equipped with an engine not shown, but the present embodiment also covers any electric vehicle and fuel cell vehicle if they are driven by a motor.

Power reception device 40 includes a power-receiving-side resonance unit 27 and a power-receiving-side electromagnetic induction coil 12. Power-receiving-side resonance unit 27 includes a power-receiving-side resonance coil 11 and a power-receiving-side capacitor 19. Power-receiving-side resonance unit 27 is a series LC resonator formed by power-receiving-side resonance coil 11 and power-receiving-side capacitor 19. The resonance frequency of power-receiving-side resonance unit 27 and the resonance frequency of power-transmission-side resonance unit 28 are substantially in agreement with each other. Power reception device 40 is surrounded by a power-receiving-side shield unit 50 shielding an electromagnetic field produced from power-receiving-side resonance coil 11 and power-receiving-side electromagnetic induction coil 12.

With an alternating current whose frequency is the resonance frequency flowing through power-transmission-side resonance unit 28, an electromagnetic field is produced around power-transmission-side resonance coil 24 of power-transmission-side resonance unit 28. With power-receiving-side resonance coil 11 located in a predetermined range from power-transmission-side resonance coil 24, an electric current flows in power-receiving-side resonance coil 11 by the above-mentioned electromagnetic field.

Since the resonance frequency of power-transmission-side resonance unit 28 and the resonance frequency of power-receiving-side resonance unit 27 are substantially in agreement with each other, electric power is supplied favorably to power-receiving-side resonance coil 11. In this manner, power-receiving-side resonance unit 27 and power-transmission-side resonance unit 28 resonate with each other through the electromagnetic field, and power-receiving-side resonance coil 11 receives electric power. It is noted that power-receiving-side resonance coil 11 is located in the near field (evanescent field) of the electromagnetic field produced around power-transmission-side resonance coil 24, and receives electric power efficiently. The details of a method of wireless power transmission/reception method through use of the electromagnetic resonance scheme will be described later.

Power-receiving-side electromagnetic induction coil 12 is coupled to power-receiving-side resonance coil 11 so as to achieve electromagnetic induction, and takes out electric power received by power-receiving-side resonance coil 11. With power-receiving-side electromagnetic induction coil 12 successively taking out electric power from power-receiving-side resonance coil 11, electric power is supplied successively from power-transmission-side resonance coil 24 to power-receiving-side resonance coil 11 through the electromagnetic field. In this manner, a wireless power transmission/reception system of the so-called electromagnetic resonance scheme is adopted between power reception device 40 and power transmission device 41.

Rectifier 13 is connected to power-receiving-side electromagnetic induction coil 12, and converts an alternating current supplied from power-receiving-side electromagnetic induction coil 12 into a direct current for supply to DC-DC converter 14.

DC-DC converter 14 adjusts the voltage of the direct current supplied from rectifier 13 for supply to battery 15. It is noted that DC-DC converter 14 is not an essential structure, and may be omitted. In this case, external power feeding device 20 can be provided with a matching box for adjusting the impedance to substitute for DC-DC converter 14.

Power control unit 16 includes a converter connected to battery 15 and an inverter connected to this converter. The converter adjusts (boosts) a direct current supplied from battery 15 for supply to the inverter. The inverter converts the direct current supplied from the converter into an alternating current for supply to motor unit 17.

Motor unit 17 is implemented by a three-phase AC motor, for example, and driven by the alternating current supplied from the inverter of power control unit 16.

It is noted that, in the case where electric powered vehicle 10 is a hybrid vehicle, electric powered vehicle 10 further includes an engine and a power split device, and motor unit 17 includes a motor generator mainly functioning as a power generator and a motor generator mainly functioning as an electric motor.

As described above, the resonance scheme through use of an electromagnetic field, which is a wireless power transmission/reception system, is adopted between power reception device 40 and power transmission device 41 according to the present embodiment. Power transmission device 41 and power reception device 40 resonate with each other through the electromagnetic field. Here, "resonate through the electromagnetic field" is a concept covering both the case of resonating through a magnetic field and the case of resonating through an electric field. It is noted that, although the present embodiment mainly describes an example where power reception device 40 and power transmission device 41 resonate with each other through a magnetic field, the present invention also covers the case where they resonate with each other through an electric field, as a matter of course.

Fig. 2 is a schematic diagram for illustrating the principle of power transmission and power reception by the resonance scheme. The principle of power transmission and power reception by the resonance scheme will be described using Fig. 2.

Referring to Fig. 2, in this resonance scheme, two LC resonance coils having the same natural frequency resonate with each other in an electromagnetic field (near field) similarly to the case where two tuning forks resonate, so that electric power is transmitted from one coil to the other coil through the electromagnetic field.

Specifically, a primary coil 32 is connected to a high frequency generator 31, and high frequency power ranging from 1 MHz to several tens of megahertz is supplied to a primary resonance coil 33 magnetically coupled to primary coil 32 by electromagnetic induction. Primary resonance coil 33 is a series LC resonator formed of the coil's own inductance and stray capacitance (when a capacitor is connected to a coil, including the capacitance of the capacitor), and resonates with a secondary resonance coil 34 having the same resonance frequency as primary resonance coil 33 through an electromagnetic field (near field). Then, energy (electric power) moves from primary resonance coil 33 to secondary resonance coil 34 through the electromagnetic field. The energy (electric power) having moved to secondary resonance coil 34 is taken out by a secondary coil 35 magnetically coupled to secondary resonance coil 34 by electromagnetic induction and is supplied to a load 36. It is noted that power transmission by the resonance scheme is achieved when a Q value indicating the resonance intensity of primary resonance coil 33 and secondary resonance coil 34 is larger than 100, for example.

It is noted that, as for the correspondence between the structure of Fig. 2 and the structure of Fig. 1, AC power source 21 and high frequency power driver 22 shown in Fig. 1 correspond to high frequency generator 31 of Fig. 2. Power-transmission-side electromagnetic induction coil 23 shown in Fig. 1 corresponds to primary coil 32 of Fig. 2. Furthermore, power-transmission-side resonance coil 24 and power-transmission-side capacitor 25 shown in Fig. 1 correspond to primary resonance coil 33 and the stray capacitance of primary resonance coil 33 of Fig. 2.

Power-receiving-side resonance coil 11 and power-receiving-side capacitor 19 shown in Fig. 1 correspond to secondary resonance coil 34 and the stray capacitance of secondary resonance coil 34 shown in Fig. 2.

Power-receiving-side electromagnetic induction coil 12 shown in Fig. 1 corresponds to secondary coil 35 of Fig. 2. Rectifier 13, DC-DC converter 14 and battery 15 shown in Fig. 1 correspond to load 36 shown in Fig. 2.

Furthermore, the wireless power transmission/reception system according to the present embodiment improves efficiency in power transmission and power reception through use of a near field (evanescent field) where an "electrostatic field" of an electromagnetic field is dominant.

Fig. 3 is a diagram showing the relationship between the distance from an electric current source (magnetic current source) and the intensity of an electromagnetic field. Referring to Fig. 3, an electromagnetic field consists of three components. A curve k1 is a component inversely proportional to the distance from a wave source, and is called a "radiation electric field." A curve k2 is a component inversely proportional to the square of the distance from the wave source, and is called an "induction field." A curve k3 is a component inversely proportional to the cube of the distance from the wave source, and is called an "electrostatic field."

The "electrostatic field" is a region where the intensity of electromagnetic wave rapidly decreases with the distance from the wave source. By the resonance scheme, energy (electric power) is transmitted through use of a near field (evanescent field) where this "electrostatic field" is dominant. That is, by causing a pair of resonators (e.g., a pair of LC resonance coils) having the same natural frequency to resonate with each other in the near field where the "electrostatic field" is dominant, energy (electric power) is transmitted from one resonator (primary resonance coil) to the other resonator (secondary resonance coil). Since this "electrostatic field" does not propagate energy to a distant place, electric power can be transmitted with less energy loss by the resonance scheme, as compared with an electromagnetic wave transmitting energy (electric power) through a "radiation electric field" propagating energy to a distant place.

In this manner, electric powered vehicle 10 according to the present embodiment and external power feeding device 20 transmit and receive electric power between power reception device 40 of electric powered vehicle 10 and power transmission device 41 of external power feeding device 20 through use of resonance of the near field of the electromagnetic field.

### (Specific Configuration of Power Transmission Device 41)

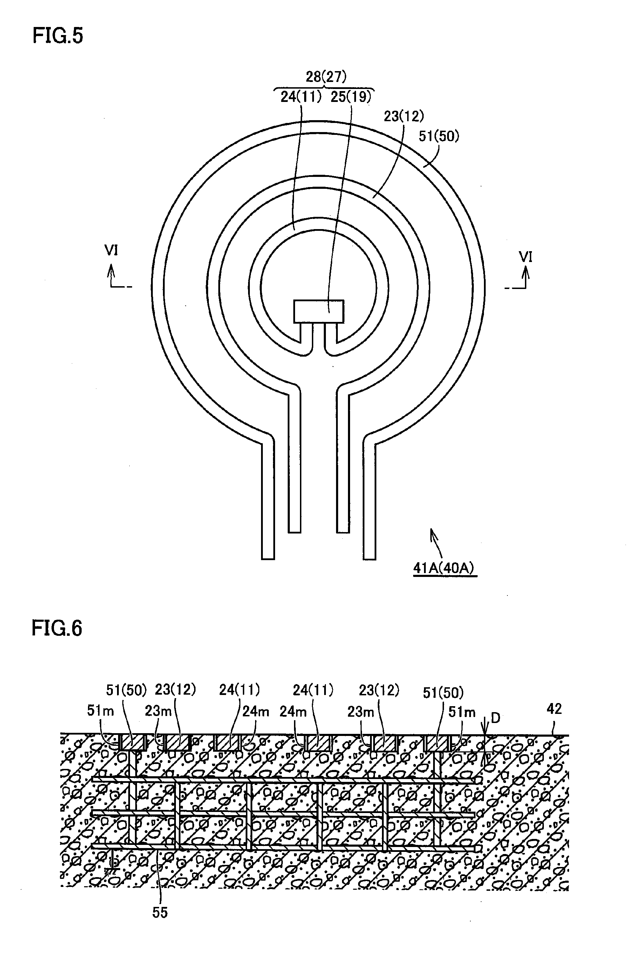

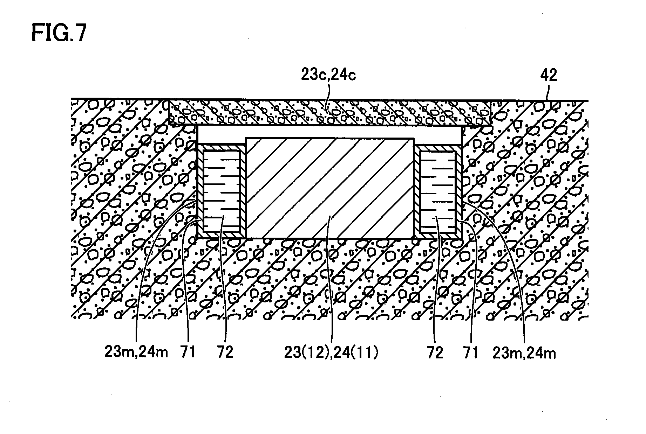

Referring to Figs. 4 to 6, a specific configuration of power transmission device 41 according to the present embodiment will now be described. It is noted that Fig. 4 is a schematic side view of a vehicle placed on a vehicle placement surface and a power transmission device embedded in the vehicle placement surface, Fig. 5 is a plan view showing a schematic structure of the power transmission device, and Fig. 6 is an arrow sectional view taken along the line VI-VI in Fig. 5. It is noted that the numbers in parentheses in the drawings indicate the reference numbers of the respective devices when power reception device 40 is embedded under vehicle placement surface 42, which will be described later in detail. The same applies to Figs. 7 to 10.

As shown in Fig. 4, a power transmission device 41A according to the present embodiment is embedded under vehicle placement surface 42 of a parking space on which electric powered vehicle 10 is placed.

As shown in Figs. 5 and 6, power transmission device 41 A according to the present embodiment includes an annular power-transmission-side resonance coil 24, an annular power-transmission-side electromagnetic induction coil 23 provided to surround the outside of this power-transmission-side resonance coil 24, and an annular power-transmission-side shield unit 51 provided to surround the outside of this power-transmission-side electromagnetic induction coil 23.

Power-transmission-side capacitor 25 is connected to power-transmission-side resonance coil 24. Power-transmission-side resonance coil 24 and power-transmission-side capacitor 25 constitute power-transmission-side resonance unit 28.

Here, when the distance between power-transmission-side resonance coil 24 and power-transmission-side shield unit 51 becomes shorter, the inductance value (L value) decreases. Thus, to maintain the resonance frequency, it is necessary to increase the number of turns and the diameter of power-transmission-side resonance coil 24. However, increase in number of turns and diameter will increase the device size.

Therefore, by disposing transmission side resonance coil 24 on the inner side and power-transmission-side electromagnetic induction coil 23 on the outer side to increase the distance between power-transmission-side resonance coil 24 and power-transmission-side shield unit 51 as shown in Fig. 5, the influence of variations in inductance value (L value) depending on the distance between power-transmission-side shield unit 51 and power-transmission-side resonance coil 24 can be reduced to reduce the device size.

Moreover, by disposing power-transmission-side electromagnetic induction coil 23 between power-transmission-side resonance coil 24 and power-transmission-side shield unit 51, the space for installation can be effectively used, and it becomes easy to lay electric power lines supplying electric power to power-transmission-side electromagnetic induction coil 23.

Furthermore, by disposing power-transmission-side resonance coil 24 on the inner side of power-transmission-side electromagnetic induction coil 23, parts (a capacitor, etc.) of power-transmission-side capacitor 25 connected to power-transmission-side resonance coil 24 can be disposed in the space on the inner circumferential side of power-transmission-side resonance coil 24 to reduce the device size.

It is noted that when there is no need to consider increase in device size and laying of electric power lines supplying electric power to power-transmission-side electromagnetic induction coil 23, a structure in which power-transmission-side resonance coil 24 is disposed on the outer side of power-transmission-side electromagnetic induction coil 23 can also be adopted.

Moreover, in order to increase the shielding effect of power-transmission-side shield unit 51, power-transmission-side shield unit 51 is connected to a reinforcing member 55 of a motor pool embedded in the ground. Providing the shielding effect for reinforcing member 55 of the motor pool eliminates the need to separately provide a large shield unit, so that power-transmission-side electromagnetic induction coil 23 and power-transmission-side resonance coil 24 each having a large diameter can be adopted at low cost. It is noted that when power-transmission-side shield unit 51 has a sufficient shielding effect, it is not necessary to connect power-transmission-side shield unit 51 to reinforcing member 55.

In the present embodiment, the parking space is made from concrete, and slots 23m, 24m and 51m recessed downwardly are provided in the surface of vehicle placement surface 42. Slot 23m stores power-transmission-side electromagnetic induction coil 23. Slot 24m stores power-transmission-side resonance coil 24. Slot 51m stores power-transmission-side shield unit 51. In this manner, providing slots 23m and 24m in which power-transmission-side electromagnetic induction coil 23 and power-transmission-side resonance coil 24 are stored, respectively, eliminates the need of bobbins on which power-transmission-side electromagnetic induction coil 23 and power-transmission-side resonance coil 24 are wound.

In this manner, by storing power-transmission-side electromagnetic induction coil 23, power-transmission-side resonance coil 24 and power-transmission-side shield unit 51 in slots 23m, 24m and 51m, respectively, power-transmission-side electromagnetic induction coil 23, power-transmission-side resonance coil 24 and power-transmission-side shield unit 51 can be easily disposed in an identical plane.

In the present embodiment, since lead wires having the same sectional shape are used for power-transmission-side electromagnetic induction coil 23, power-transmission-side resonance coil 24 and power-transmission-side shield unit 51, the upper surfaces of power-transmission-side electromagnetic induction coil 23, power-transmission-side resonance coil 24 and power-transmission-side shield unit 51 will be located in an identical plane, and the bottom surfaces of power-transmission-side electromagnetic induction coil 23, power-transmission-side resonance coil 24 and power-transmission-side shield unit 51 will also be located in an identical plane.

It is noted that, in the present embodiment, being located in an identical plane refers to a state where power-transmission-side electromagnetic induction coil 23 and power-transmission-side resonance coil 24 as seen in a plane view do not overlap each other, but are disposed to extend along the plane.

It is preferable that when materials having different rectangular cross sectional shapes are used for power-transmission-side electromagnetic induction coil 23, power-transmission-side resonance coil 24 and power-transmission-side shield unit 51, the upper surfaces of power-transmission-side electromagnetic induction coil 23, power-transmission-side resonance coil 24 and power-transmission-side shield unit 51 be located in an identical plane, however, the lower surfaces of power-transmission-side electromagnetic induction coil 23, power-transmission-side resonance coil 24 and power-transmission-side shield unit 51 may also be located in an identical plane.

It is preferable that when lead wires having circular cross sectional shapes are used for power-transmission-side electromagnetic induction coil 23, power-transmission-side resonance coil 24 and power-transmission-side shield unit 51, the upper ends of power-transmission-side electromagnetic induction coil 23, power-transmission-side resonance coil 24 and power-transmission-side shield unit 51 be located in an identical plane, however, the lower ends of power-transmission-side electromagnetic induction coil 23, power-transmission-side resonance coil 24 and power-transmission-side shield unit 51 may also be located in an identical plane.

Since power-transmission-side shield unit 51 does not generate heat, there is no need to take any measure against heat radiation for power-transmission-side shield unit 51 in either case of adopting a structure where the surface of power-transmission-side shield unit 51 is exposed or a structure where power-transmission-side shield unit 51 is entirely embedded.

On the other hand, since power-transmission-side electromagnetic induction coil 23 and power-transmission-side resonance coil 24 generate heat, it is preferable to adopt a structure of promoting heat radiation. Therefore, as shown in Fig. 6, it is preferable to embed power-transmission-side electromagnetic induction coil 23 and power-transmission-side resonance coil 24 under vehicle placement surface 42 with their surfaces exposed.

It is noted that there may be a need to embed power-transmission-side electromagnetic induction coil 23 and power-transmission-side resonance coil 24 under vehicle placement surface 42 such that their surfaces are not exposed. In such a case, it is favorable to provide slots 23m and 24m in which power-transmission-side electromagnetic induction coil 23 and power-transmission-side resonance coil 24 are stored entirely and to provide concrete lids 23c and 24c blocking slots 23m and 24m, as shown in Fig. 7. Furthermore, in order to promote heat radiation from power-transmission-side electromagnetic induction coil 23 and power-transmission-side resonance coil 24, it is favorable to provide a cooling device 70 in slots 23m and 24m.

As an example of cooling device 70, it is favorable to dispose a cooling tube 71 on both sides of power-transmission-side electromagnetic induction coil 23 and power-transmission-side resonance coil 24 and to flow a coolant 72 through cooling tube 71. Accordingly, power-transmission-side electromagnetic induction coil 23 and power-transmission-side resonance coil 24 can be cooled efficiently. Moreover, heat is recovered from coolant 72, and effective use of this recovered heat (e.g., power generation, heat exchange, etc.) can be made.

It is noted that an annular form as seen in a plane view is adopted as the form of power-transmission-side electromagnetic induction coil 23, power-transmission-side resonance coil 24 and power-transmission-side shield unit 51 shown in Fig. 5, but this form is not a limitation.

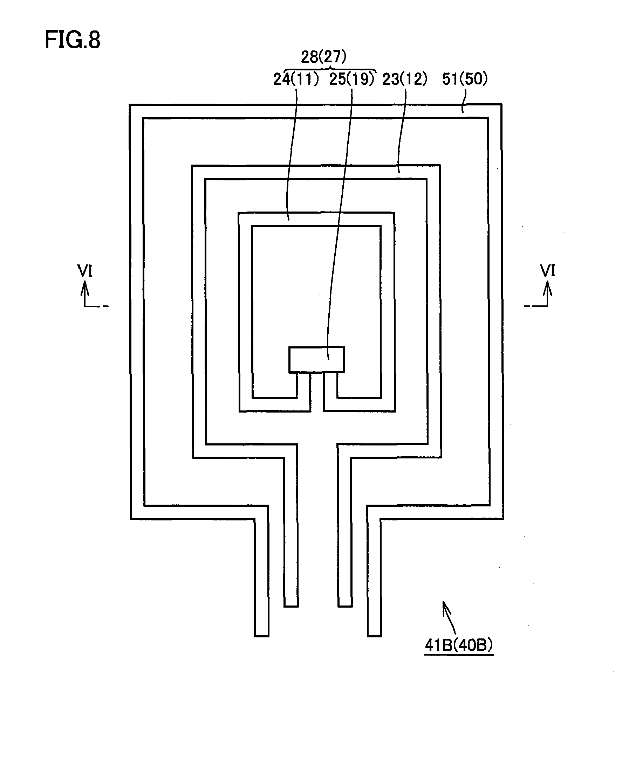

For example, like a power transmission device 41B shown in and Fig. 8, a rectangular form as seen in a plane view may be adopted as the form of power-transmission-side electromagnetic induction coil 23, power-transmission-side resonance coil 24 and power-transmission-side shield unit 51. The cross section taken along the line VI-VI in Fig. 8 is the same as the cross section shown in Fig. 6.

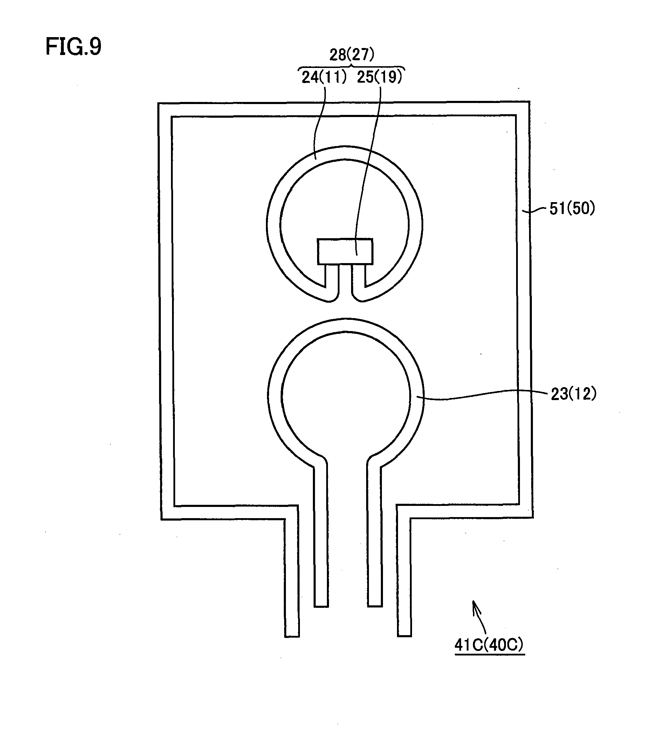

Alternatively, like a power transmission device 41C shown in Fig. 9, another form can also be adopted in which power-transmission-side electromagnetic induction coil 23 and power-transmission-side resonance coil 24 are disposed independently in an annular form in an identical plane and rectangular power-transmission-side shield unit 51 is arranged to surround power-transmission-side electromagnetic induction coil 23 and power-transmission-side resonance coil 24, without providing power-transmission-side electromagnetic induction coil 23 to surround power-transmission-side resonance coil 24. In this case, power-transmission-side shield unit 51 may have an annular form.

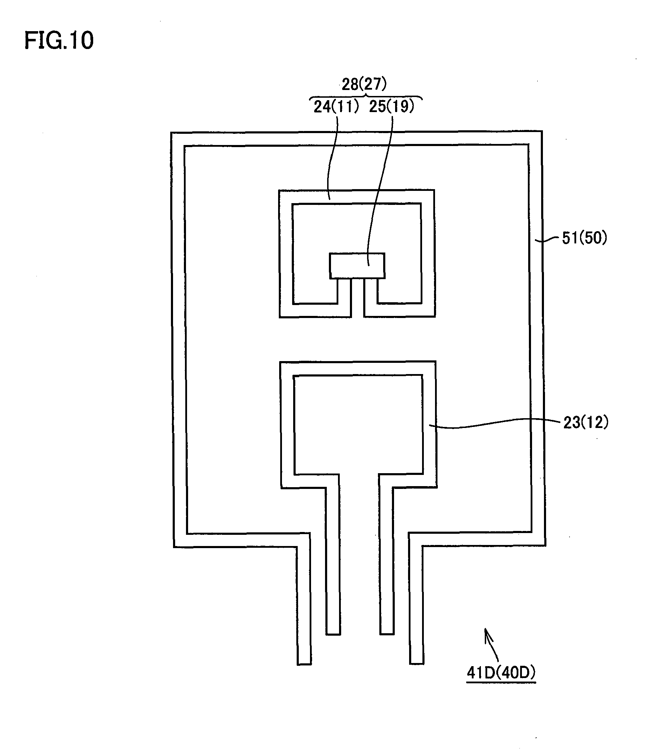

Alternatively, like a power transmission device 41D shown in Fig. 10, a form can also be adopted in which power-transmission-side electromagnetic induction coil 23 and power-transmission-side resonance coil 24 are disposed independently in a rectangular form and rectangular power-transmission-side shield unit 51 is arranged to surround power-transmission-side electromagnetic induction coil 23 and power-transmission-side resonance coil 24. In this case, power-transmission-side shield unit 51 may have an annular form.

It is noted that although the case of using annular coils as power-receiving-side resonance coil 11 and power-transmission-side resonance coil 24 has been described, the form is not limited to an annular coil, but a rod-like form or a fishbone-like form, for example, can also be applied.

In this manner, in the present embodiment, the structure in which power-transmission-side electromagnetic induction coil 23, power-transmission-side resonance coil 24 and power-transmission-side shield unit 51 are stored in slots 23m, 24m and 51m provided in vehicle placement surface 42 of the parking space, respectively, is adopted.

Accordingly, power-transmission-side electromagnetic induction coil 23, power-transmission-side resonance coil 24 and power-transmission-side shield unit 51 can be easily installed in an identical plane in vehicle placement surface 42 of a parking space. As a result, a shield box which has been conventionally required is unnecessary.

Moreover, the physical size of power transmission device 41, particularly, the physical size in the height direction can be reduced. Moreover, when providing a power transmission device used for the power transfer system in the vehicle placement surface, slots 23m, 24m and 51m can be shaped in the vehicle placement surface simultaneously with the design of the motor pool, and lead wires constituting power-transmission-side electromagnetic induction coil 23, power-transmission-side resonance coil 24 and power-transmission-side shield unit 51 can be laid along slots 23 m, 24m and 51m. Therefore, the design and construction of the power transmission device can be facilitated.

Since power-transmission-side electromagnetic induction coil 23, power-transmission-side resonance coil 24 and power-transmission-side shield unit 51 are stored in slots 23m, 24m and 51m, respectively, loads to be imposed on power-transmission-side electromagnetic induction coil 23, power-transmission-side resonance coil 24 and power-transmission-side shield unit 51 when a vehicle passes thereon can be distributed.

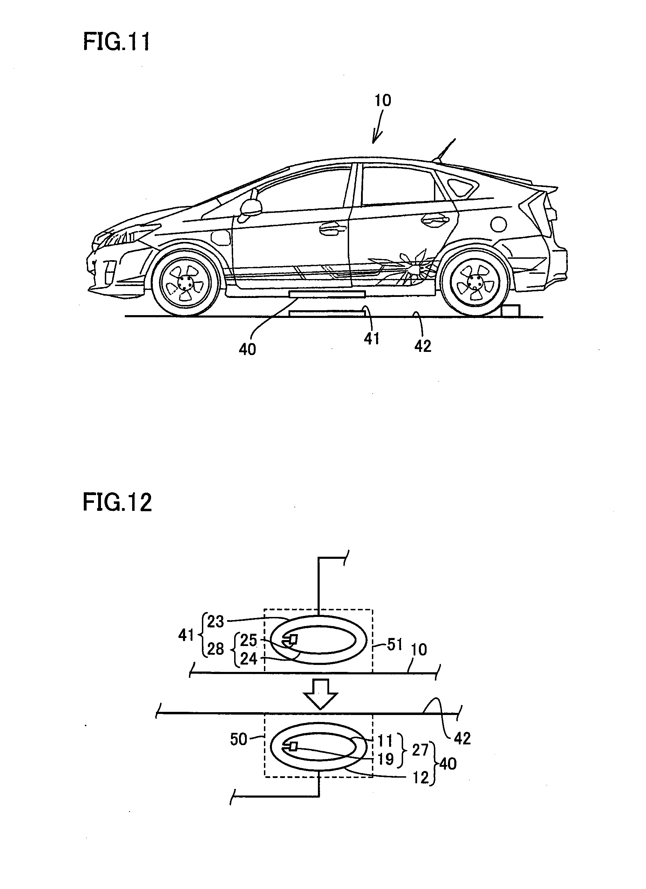

It is noted that although the above-described embodiment has illustrated the case where power transmission device 41 having power-transmission-side electromagnetic induction coil 23, power-transmission-side resonance coil 24 and power-transmission-side shield unit 51 is embedded under vehicle placement surface 42 of a parking space, a structure in which power transmission device 41 is placed on vehicle placement surface 42 can also be adopted as shown in Fig. 11.

Even in this case, the design in consideration of a withstand load when run over by a vehicle or the like and the design of a structure that does not interfere with walking of a pedestrian or the like are easily performed because power transmission device 41 according to the present embodiment can be reduced in physical size particularly in the height direction.

Furthermore, although the above-described embodiment has illustrated the case where power transmission device 41 is provided in vehicle placement surface 42 of a parking space, even in the case where the electric powered vehicle 10 side has the functions of power transmission device 41 and the vehicle placement surface 42 side has the functions of power reception device 40 as shown in Fig. 12, operation effects similar to those of power transmission device 41 in the above-described embodiment can be obtained by adopting the structure illustrated in the above-described embodiment for power reception device 40 on the vehicle placement surface 42 side. It is noted that the numbers in parentheses shown in Figs. 5 to 10 indicate the reference numbers of the respective devices in the case where the functions of power reception device 40 are provided for the vehicle placement surface 42 side.

Moreover, referring again to Fig. 1, a structure in which power-receiving-side resonance coil 11 and power-receiving-side electromagnetic induction coil 12 adopted on the power reception device 40 side mounted on vehicle 10 are disposed in an identical plane as described with reference to Figs. 5, 8, 9, and 10 can be adopted. Accordingly, the physical size of power reception device 40 in the height direction can be reduced.

It is noted that the numbers in the parentheses shown in Figs. 5, 8, 9, and 10 are also reference numbers of not only respective devices in the case where the functions of power reception device 40 are provided for the above-described vehicle placement surface 42 side, but also respective devices of power-receiving-side resonance coil 11, power-receiving-side electromagnetic induction coil 12 and power-receiving-side shield unit 50 in the state where power reception device 40 is mounted on the vehicle 10 side.

It should be understood that the embodiment disclosed herein is illustrative and non-restrictive in every respect. The scope of the present invention is defined by the claims, and is intended to include any modification within the meaning and scope equivalent to the claims.

### INDUSTRIAL APPLICABILITY

The present invention is applicable to a power transmission device, a power reception device and a power transfer system.

### REFERENCE SIGNS LIST

10 electric powered vehicle; 11 power-receiving-side resonance coil; 12 power-receiving-side electromagnetic induction coil; 13 rectifier; 14 converter; 15 battery; 16 power control unit; 17 motor unit; 19 power-receiving-side capacitor ; 20 external power feeding device; 21 AC power source; 22 high frequency power driver; 23 power-transmission-side electromagnetic induction coil; 23c, 24c lid; 23m, 24m, 51m slot; 24 power-transmission-side resonance coil; 25 power-transmission-side capacitor; 26 control unit; 27 power-receiving-side resonance unit; 28 power-transmission-side resonance unit; 31 high frequency generator; 32 primary coil; 33 primary resonance coil; 34 secondary resonance coil; 35 secondary coil; 36 load; 40, 40A, 40B, 40C, 40D power reception device; 41, 41A, 41B, 41C, 41D power transmission device; 42 vehicle placement surface; 50 power-receiving-side shield unit; 51 power-transmission-side shield unit; 55 reinforcing member; 70 cooling device; 71 cooling tube; 72 coolant.

## Claims

1. A power transmission device (41) for use in a power transfer system in which resonance through an electromagnetic field is used, comprising:
a power-transmission-side electromagnetic induction coil (23);
a power-transmission-side resonance unit (28); and
a power-transmission-side shield unit (51) surrounding said power-transmission-side electromagnetic induction coil (23) and said power-transmission-side resonance unit (28),
said power-transmission-side electromagnetic induction coil (23) and said power-transmission-side resonance unit (28) being disposed in an identical plane.

2. The power transmission device according to claim 1, wherein
said power-transmission-side resonance unit (28) has a power-transmission-side resonance coil (24), and
said power-transmission-side electromagnetic induction coil (23) and said power-transmission-side resonance coil (24) are disposed in an identical plane.

3. The power transmission device according to claim 2, wherein said power-transmission-side resonance coil (24) is disposed on the inner side of said power-transmission-side electromagnetic induction coil (23).

4. The power transmission device according to claim 3, wherein
said power transmission device is provided at a vehicle placement surface (42), and
said power-transmission-side electromagnetic induction coil (23), said power-transmission-side resonance coil (24) and said power-transmission-side shield unit (51) are embedded under said vehicle placement surface (42).

5. The power transmission device according to claim 4, comprising a plurality of slots (23m, 24m, 51m) recessed from said vehicle placement surface (42), wherein
said power-transmission-side electromagnetic induction coil (23), said power-transmission-side resonance coil (24) and said power-transmission-side shield unit (51) are disposed in said slots (23m, 24m, 51m), respectively.

6. The power transmission device according to claim 4, wherein
said vehicle placement surface (42) is a surface (42) of a motor pool having a reinforcing member (55) embedded in the ground, and
said power-transmission-side shield unit (51) is connected to said reinforcing member (55).

7. A power reception device (40) for use in a power transfer system in which resonance through an electromagnetic field is used, comprising:
a power-receiving-side electromagnetic induction coil (12);
a power-receiving-side resonance unit (27); and
a power-receiving-side shield unit (51) surrounding said power-receiving-side electromagnetic induction coil (12) and said power-receiving-side resonance unit (27),
said power-receiving-side electromagnetic induction coil (12) and said power-receiving-side resonance unit (27) being disposed in an identical plane.

8. The power reception device according to claim 7, wherein
said power-receiving-side resonance unit (27) has a power-receiving-side resonance coil (11), and
said power-receiving-side electromagnetic induction coil (12) and said power-receiving-side resonance coil (11) are disposed in an identical plane.

9. The power reception device according to claim 8, wherein said power-receiving-side resonance coil (11) is disposed on the inner side of said power-receiving-side electromagnetic induction coil (12).

10. A power transfer system comprising a power transmission device (41) and a power reception device (40),
said power transmission device (41) including
a power-transmission-side electromagnetic induction coil (23),
a power-transmission-side resonance unit (28), and
a power-transmission-side shield unit (51) surrounding said power-transmission-side electromagnetic induction coil (23) and said power-transmission-side resonance unit (28),
said power reception device (40) including
a power-receiving-side electromagnetic induction coil (12),
a power-receiving-side resonance unit (27) configured to resonate with said power-transmission-side resonance unit (28) through an electromagnetic field, and
a power-receiving-side shield unit (50) surrounding said power-receiving-side electromagnetic induction coil (12) and said power-receiving-side resonance unit (27), and
said power-transmission-side electromagnetic induction coil (23) and said power-transmission-side resonance unit (28) being disposed in an identical plane.

11. The power transfer system according to claim 10, wherein
said power-transmission-side resonance unit (28) has a power-transmission-side resonance coil (24), and
said power-transmission-side electromagnetic induction coil (23) and said power-transmission-side resonance coil (24) are disposed in an identical plane.

12. The power transfer system according to claim 11, wherein said power-transmission-side resonance coil (24) is disposed on the inner side of said power-transmission-side electromagnetic induction coil (23).

13. The power transfer system according to claim 12, wherein
said power transmission device is provided at a vehicle placement surface (42), and
said power-transmission-side electromagnetic induction coil (23), said power-transmission-side resonance coil (24) and said power-transmission-side shield unit (51) are embedded under said vehicle placement surface (42).

14. The power transfer system according to claim 13, comprising a plurality of slots (23m, 24m, 51m) recessed from said vehicle placement surface (42), wherein
said power-transmission-side electromagnetic induction coil (23), said power-transmission-side resonance coil (24) and said power-transmission-side shield unit (51) are disposed in said slots (23m, 24m, 51m), respectively.

15. The power transfer system according to claim 13, wherein
said vehicle placement surface (42) is a surface (42) of a motor pool having a reinforcing member (55) embedded in the ground, and
said power-transmission-side shield unit (51) is a connected to said reinforcing member (55).

16. A power transfer system comprising a power transmission device (41) and a power reception device (40),
said power transmission device (41) including
a power-transmission-side electromagnetic induction coil (23),
a power-transmission-side resonance unit (28), and
a power-transmission-side shield unit (51) surrounding said power-transmission-side electromagnetic induction coil (23) and said power-transmission-side resonance unit (28),
said power reception device (40) including
a power-receiving-side electromagnetic induction coil (12),
a power-receiving-side resonance unit (27) configured to resonate with said power-transmission-side resonance unit (28) through an electromagnetic field, and
a power-receiving-side shield unit (50) surrounding said power-receiving-side electromagnetic induction coil (12) and said power-receiving-side resonance unit (27), and
said power-receiving-side electromagnetic induction coil (12) and said power-receiving-side resonance unit (27) being disposed in an identical plane.

17. The power transfer system according to claim 16, wherein
said power-receiving-side resonance unit (27) has a power-receiving-side resonance coil (11), and
said power-receiving-side electromagnetic induction coil (12) and said power-receiving-side resonance coil (11) are disposed in an identical plane.

18. The power transfer system according to claim 17, wherein said power-receiving-side resonance coil (11) is disposed on the inner side of said power-receiving-side electromagnetic induction coil (12).

19. A power transfer system comprising a power transmission device (41) and a power reception device (40),
said power transmission device (41) including
a power-transmission-side electromagnetic induction coil (23),
a power-transmission-side resonance unit (28), and
a power-transmission-side shield unit (51) surrounding said power-transmission-side electromagnetic induction coil (23) and said power-transmission-side resonance unit (28),
said power reception device (40) including
a power-receiving-side electromagnetic induction coil (12),
a power-receiving-side resonance unit (27) configured to resonate with said power-transmission-side resonance unit (28) through an electromagnetic field, and
a power-receiving-side shield unit (50) surrounding said power-receiving-side electromagnetic induction coil (12) and said power-receiving-side resonance unit (27),
said power-transmission-side electromagnetic induction coil (23) and said power-transmission-side resonance unit (28) being disposed in an identical plane, and
said power-receiving-side electromagnetic induction coil (12) and said power-receiving-side resonance unit (27) being disposed in an identical plane.

20. The power transfer system according to claim 19, wherein
said power-transmission-side resonance unit (28) has a power-transmission-side resonance coil (24),
said power-transmission-side electromagnetic induction coil (23) and said power-transmission-side resonance coil (24) are disposed in an identical plane,
said power-receiving-side resonance unit (27) has a power-receiving-side resonance coil (11), and
said power-receiving-side electromagnetic induction coil (12) and said power-receiving-side resonance coil (11) are disposed in an identical plane.

21. The power transfer system according to claim 20, wherein
said power-transmission-side resonance coil (24) is disposed on the inner side of said power-transmission-side electromagnetic induction coil (23), and
said power-receiving-side resonance coil (11) is disposed on the inner side of said power-receiving-side electromagnetic induction coil (12).
